# EUROPÄISCHE PATENTSCHRIFT

(11) **EP 1 895 219 B1**
(45) Veröffentlichungstag und Bekanntmachung des Hinweises auf die Patenterteilung: **04.05.2011**
(21) Anmeldenummer: 07012860.8
(22) Anmeldetag: 30.06.2007
(51) Int. Cl.: F16K 31/56, F16K 35/06

(54) **Anordnung zur elektrischen Auslösung von mechanisch betätigbaren Schnellverschlussventilen**
Assembly for electric activation of mechanically actuated rapid action valves
Agencement destiné au déclenchement électrique de vannes de fermeture rapide pouvant être actionnées mécaniquement

(30) Priorität: 31.08.2006 DE 102006040953
(43) Veröffentlichungstag der Anmeldung: 05.03.2008
(73) Patentinhaber: Armaturen-Wolff, 22419 Hamburg (DE)
(72) Erfinder: Wolff, Hendrik, 22926 Ahrensburg (DE)
(74) Vertreter: Hansmann, Dierk

(56) Entgegenhaltungen:
- WO-A-96/41981
- DE-A1- 19 627 925
- DE-B- 1 025 225
- US-A- 4 494 727
- US-A- 4 848 388

## Beschreibung

Die Erfindung bezieht sich auf eine Anordnung zur Notauslösung von mechanisch betätigbaren Schnellschlußventilen zur Abschaltung von Versorgungsleitungen, wobei eine spannbare Feder in Öffnungsstellung des Schnellschlußventils einer arretierbaren Verschluß- und Öffnungsmittel tragenden Spindel, die über ein Verriegelungselement in geöffneter Ventilstellung gehalten wird und nach Freigabe des Verriegelungselementes das Ventil über die Feder schließt.

Schnellschlußventile dieser Art sind in unterschiedlichen Ausführungen bekannt. Hierbei ist es bekannt, im Notfall über Lösen eines Verriegelungselementes das Schnellschlußventil durch eine zugeordnete Feder zu gewährleisten, wobei ein Impuls aufgebracht werden muß, um die Arretierung des Verriegelungselementes freizugeben. Diese Anordnungen werden vor allem auf Schiffen eingesetzt, um im Notfall, wie eines Brandes, Brennstoffzuleitungen aus sicherer Entfernung fernbetätigt abzusperren. Hierbei ist es oftmals erforderlich, mehrere Ventile gleichzeitig abzuschalten.

Zur Fernauslösung ist es bekannt, eine manuelle Auslösung per Seilzug durchzuführen. Diese Auslösung erfordert zwar keine externen Energieanschlüsse, ist aber für den Einsatz über größere Entfernungen problematisch und zum Auslösen mehrerer Ventile nicht einsetzbar. Ferner ist eine hydraulische Auslösung bekannt, wobei aufwendige Installationen durch hydraulische Steuerleitungen erforderlich sind. Es können dabei Schwierigkeiten bei komplexen Systemen und Höhenunterschiede der Ventile auftreten. Bei einer weiteren bekannten Anordnung wird eine pneumatische Auslösung vorgeschlagen und ein zentrales Druckversorgungssystem mit Hilfe eines Druckspeichers vorgesehen. Hierbei besteht der Mangel, daß vielfache Überwachungsinstrumente und Steuereinrichtungen erforderlich sind und dadurch eine relativ teure Auslösetechnik eingesetzt werden muß. Weiterhin ist eine aufwendige Installation durch Verlegung von pneumatischer Steuerleitungen erforderlich.

Weiterhin ist aus der DE 10 25 225 B ein Ventil bekannt, bei dem die Öffnungsstellung über eine Magnetspule gehalten wird und bei Spannungsunterbrechung das ventil schließt. Der Mangel dieser Ausbildung besteht darin, daß es nicht ermöglicht, ein mechanisch betätigbares Schnellschlußventil mit allen Funktionen einzusetzen und nachträglich eine Umrüstung vorzunehmen, um die gewünschte elektrische Auslösung für Notfälle zu ermöglichen und zentral zu steuern.

Nach der WO96/41981 A ist eine Steueranordnung bekannt, wobei ein Schließvorgang eines Ventils über eine Bestromung eines Elektromagneten erfolgt. Diese Anordnung ist für eine Notfallsteuerung nicht einsetzbar, da bei einer Notsituation und auftretenden Brandeinwirkungen die Versorgungsleitungen, wie Brennstoffleitungen, abzuschalten sind und eine elektrische Energiequelle nicht zur Verfügung steht.

Die Aufgabe der Erfindung ist es, eine überwachbare und funktionsfähige Anordnung zur Auslösung von Schnellschlußventilen zum Abschalten von versorgungsleitungen im Notfall zentral und aus einer Entfernung von eingesetzten Schnellschlußventilen sicher durchzuführen und eine einfache Installation und Anbindung an eine zentrale Schalteinheit unabhängig vom Standort zu ermöglichen.

Die Lösung dieser Aufgabe erfolgt erfindungsgemäß durch die Merkmalskombination des Anspruches 1.

Hierdurch wird eine Funktion des Gesamtsystems mit mechanisch betätigbaren Schnellschlußventilen und geringen aktiven elektrischen Haltekräften für einen Stößel eines verriegelungselementes ermöglicht, wobei eine problemlose Installation über elektrische Leitungen und eine einfache Inbetriebnahme durchführbar sowie die zentrale Schalteinheit beliebig anordbar ist.

Um im Fall eines Stromausfalls das Gesamtsystem unabhängig von einer externen Energieversorgung funktionsfähig zu erhalten, wird vorgeschlagen, daß die Schalteinheit mit einer externen elektrischen Spannungsversorgung für die Schnellschlußventile verbunden ist und eine zusätzliche unterbrechungsfreie autarke elektrische Versorgung in Form von Akkumulatoren oder Batterien aufweist.

Eine günstige Ausbildung besteht darin, daß elektrische Auslöseschalter zur Spannungsunterbrechung für die Elektromagnete als Drehkontaktschalter mit Leuchtmelder ausgebildet sind.

Um Fehlbedienungen zu unterbinden, wird vorgeschlagen, daß die Drehkontaktschalter hinter einer Sichtscheibe der Schalteinheit angeordnet sind, die zur Notfallauslösung zerstörbar ist. Ferner ist dabei vorgesehen, daß der Schalteinheit ein Nothammer für die Sichtscheibe zugeordnet ist.

In der Zeichnung ist ein Ausführungsbeispiel schematisch dargestellt. Es zeigen:

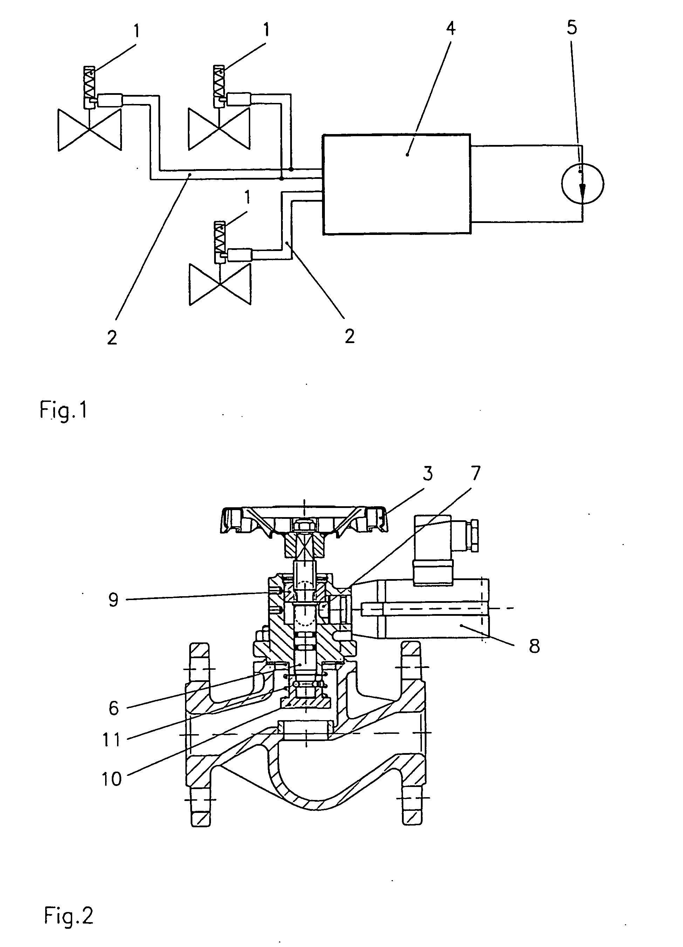

- Fig. 1: eine Anordnung mit einer Schalteinheit und mehreren über elektrische Leitungen angeschlossene Schnellschlußventile;
- Fig. 2: einen Schnitt durch ein Schnellschlußventil mit Verriegelungselement;

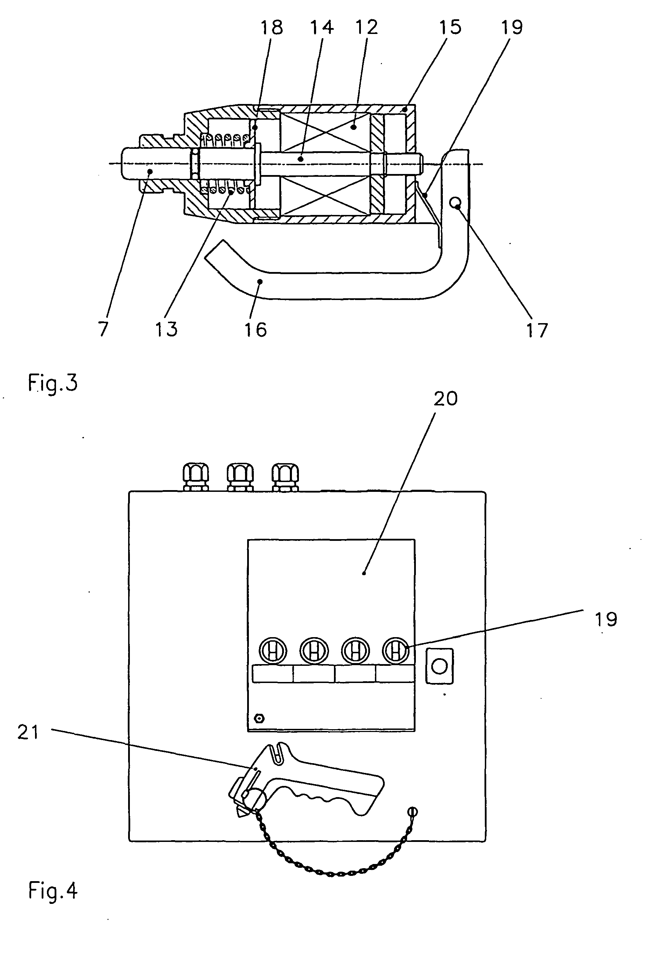

- Fig. 3: ein Verriegelungselement in vergrößerter Darstellung und
- Fig. 4: eine Schalteinheit mit Drehkontaktschalter.

Bei der dargestellten Anordnung sind mehrere Schnellschlußventile 1 über elektrische Leitungen 2 parallel mit einer zentralen Schalteinheit 4 verbunden und an eine Spannungsversorgung 5 angeschlossen.
Das Schnellschlußventil 1 wird mechanisch mit einem Handrad 3 über eine Spindel 6 in bekannter Weise geöffnet und in der Öffnungsstellung greift ein Stößel 7 eines Verriegelungselementes 8 unter eine Spindelmutter 9, um ein Schließen des Kegels 10 über eine zugeordnete Feder 11 zu verhindern.

Hierbei ist das Verriegelungselement 8 zum Halten des Stößels 7 in der Verriegelungsstellung mit einem Elektromagnet 12 als Haltemagnet versehen und in der Verriegelungsstellung entgegen der Kraft eine Feder 13 gehalten. Hierzu ist eine Spindel 14 mit dem vorderen Teil als Stößel 7 in einem Gehäuse 15 des Verriegelungselementes 8 angeordnet, wobei sich die Feder 13 über einen Federteller 18 abstützt. Der als Spule ausgebildete Elektromagnet 12 umgibt dabei die Spindel 14 zur Halterung des Stößels 7 in der verriegelungsstellung, wobei der Elektromagnet 12 über die elektrischen Leitungen 2 der Schalteinheit 4 verbunden und steuerbar ist.

In diesem Fall wird der Stößel 7 über die Spindel 14 mit einem Schwenkhebel 16 in seine Arretierungsposition gebracht, wobei der Schwenkhebel 16 schwenkbar an einer Welle 17 angeordnet ist und durch eine Blattfeder 19 seine Ausgangsstellung wieder einnimmt.

Damit die Arretierung des Schnellschlußventils 1 gelöst wird und die Feder 11 mit dem Kegel 10 das Ventil schließt, wird die Spannungsversorgung unterbrochen und die Federkraft der Feder 13 beweget den Stößel 7 zurück, da die Haltekräfte des Elektromagneten 12 aufgehoben werden. Damit ist die Arretierung des Schnellschlußventils 1 gelöst.

Durch diese Ausbildung wird der Elektromagnet 12 in der Öffnungsstellung des Schnellschlußventils 1 im Dauerbetrieb von einer elektrischen Spannung beaufschlagt, so daß ein indirektes Ruhestromprinzip vorliegt. Durch die Arretierung des Stößels 7 findet aber keine direkte Offenhaltung der Ventile durch die Hilfsenergie statt.

Zum Schließen der Schnellschlußventile 1 sind in der Schalteinheit 4 zur Spannungsunterbrechung Drehkontaktschalter 19 mit Leuchtmelder angeordnet, die als Notfallschalter hinter einer zerstörbaren Sichtscheibe 20 angeordnet sind. Hierzu ist der Schalteinheit 4 ein Nothammer 21 zugeordnet.

In der Schalteinheit 4 sind zur Überbrückung für einen Spannungsausfall nicht näher dargestellte Akkumulatoren angeordnet, um die elektrische Versorgung über einen gewissen Zeitraum unterbrechungsfrei weiter aufrecht zu erhalten und die Funktionsfähigkeit weiter zu gewährleisten.

## Patentansprüche

1. Anordnung zur Notauslösung von mechanisch betätigbaren Schnellschlußventilen (1) zur Abschaltung von versorgungsleitungen durch eine elektrische Steuerung, wobei eine spannbare Feder (11) in Öffnungsstellung des Schnellschlußventils einer arretierbaren Verschluß- und Öffnungsmittel (10) tragenden Spindel (6) zugeordnet ist, die über ein Verriegelungselement (8) in geöffneter Ventilstellung gehalten wird und nach Freigabe des Verriegelungselementes (8) das Ventil über die Feder (11) schließt sowie das Verriegelungselement (8) jedes Schnellschlußventils (1) in der verriegelungsstellung einen entgegen der Kraft einer Feder (13) angeordneten Stößel (7) aufweist, der durch einen steuerbaren Elektromagnet (12) als Haftmagnet durch eine über die Steuerleitung (2) anliegende elektrische Spannung in Öffnungsstellung gehalten wird und daß die Schnellschlußventile (1) über elektrische Steuerleitungen mit einer zentralen Schalteinheit (4) verbunden sind, **dadurch gekennzeichnet, daß** durch Spannungsunterbrechung die Stößel (7) den Schließvorgang der Schnellschlußventile (1) freigeben, wobei die Stößel (7) der verriegelungselemente (8) über zugeordnete verriegelungshebel (16) manuell in eine Verriegelungsposition einstellbar und über Elektromagneten (12) in der Verriegelungsposition haltbar sind.

2. Anordnung nach Anspruch 1, **dadurch gekennzeichnet, daß** die Schalteinheit (4) mit einer externen elektrischen Spannungsversorgung (5) für die Schnellschlußventile (1) verbunden ist und eine zusätzliche unterbrechungsfreie autarke elektrische Versorgung in Form von Akkumulatoren oder Batterien aufweist.

3. Anordnung nach Anspruch 1 oder 2, **dadurch gekennzeichnet, daß** elektrische Auslöseschalter zur Spannungsunterbrechung für die Elektromagnete (12) als Drehkontaktschalter (19) mit Leuchtmelder ausgebildet sind.

4. Anordnung nach einem der Ansprüche 1 bis 3, **dadurch gekennzeichnet, daß** die Drehkontaktschalter (19) hinter einer Sichtscheibe (20) der Schalteinheit (4) angeordnet sind, die zur Notfallauslösung zerstörbar ist.

5. Anordnung nach Anspruch 4, **dadurch gekennzeichnet, daß** der Schalteinheit (4) ein Nothammer (21) für die Sichtscheibe (20) zugeordnet ist.

## Claims

1. Arrangement for the emergency tripping of mechanically actuable quick-action stop valves (1) for the disconnection of supply lines by means of an electric control, wherein a tensionable spring (11) in open position of the quick-action stop valve is associated with a lockable spindle (6) that carries closing- and opening means (10) and is held in open valve position by means of a locking element (8) and after release of the locking element (8) closes the valve by means of the spring (11) and the locking element (8) of each quick-action stop valve (1) in the locking position comprises a plunger (7), which is disposed counter to the action of a spring (13) and is held in open position by a controllable electromagnet (12) as a magnetic clamp by means of a voltage applied via the control line (2) and that the quick-action stop valves (1) are connected by electric control lines to a central switchgear unit (4), **characterized in that** as a result of voltage cutoff the plungers (7) enable the closing operation of the quick-action stop valves (1), wherein the plungers (7) of the locking elements (8) may be set by means of associated locking levers (16) manually into a locking position and may be held in the locking position by means of electromagnets (12).

2. Arrangement according to claim 1, **characterized in that** the switchgear unit (4) is connected to an external voltage supply (5) for the quick-action stop valves (1) and comprises an additional no-break autonomous electric power supply in the form of accumulators or batteries.

3. Arrangement according to claim 1 or 2, **characterized in that** electric tripping switches for cutting off the voltage for the electromagnets (12) take the form of rotary contact switches (19) with indicator light.

4. Arrangement according to one of claims 1 to 3, **characterized in that** the rotary contact switches (19) are disposed behind a transparent pane (20) of the switchgear unit (4) that may be destroyed for the purpose of emergency tripping.

5. Arrangement according to claim 4, **characterized in that** an emergency hammer (21) for the transparent pane (20) is associated with the switchgear unit (4).

## Revendications

1. Agencement destiné au déclenchement de secours de vannes à fermeture rapide (1), qui peuvent être actionnées mécaniquement, pour la déconnexion de conduites d'alimentation au moyen d'une commande électrique, sachant qu'un ressort (11), pouvant être tendu, est associé, en position d'ouverture de la vanne à fermeture rapide, à une broche (6) blocable, qui, portant des moyens de fermeture et d'ouverture (10), peut être maintenue en position de vanne ouverte, par l'intermédiaire d'un élément de verrouillage (8), et qui, après libération dudit élément de verrouillage (8), ferme la vanne par l'intermédiaire du ressort (11), et que l'élément de verrouillage (8) de chaque vanne à fermeture rapide (1) présente un poussoir (7), qui, agencé à l'encontre de la force d'un ressort (13), est maintenu en position d'ouverture au moyen d'un électroaimant (12), réalisé en tant qu'aimant adhérant, contrôlable par une tension électrique, appliquée par l'intermédiaire d'un câble de commande électrique (2), et que les vannes à fermeture rapide (1) sont reliées à une unité de commande (4) centrale, par l'intermédiaire de câbles de commande électriques, **caractérisé en ce que**, par interruption de la tension, les poussoirs (7) libèrent le processus de fermeture des vannes à fermeture rapide (1), sachant que les poussoirs (7) des éléments de verrouillage (8) peuvent être réglés à la main dans une position de verrouillage, par l'intermédiaire de leviers de verrouillage (16), qui leur sont associés, et maintenus dans ladite position de verrouillage par l'intermédiaire des électroaimants (12).

2. Agencement selon la revendication 1, **caractérisé en ce que** l'unité de commande (4) est reliée à un système externe d'alimentation en tension (5) pour les vannes à fermeture rapide (1) et est dotée d'un système d'alimentation en courant électrique supplémentaire, autarcique, exempt d'interruption, qui est formé par des accumulateurs ou des batteries.

3. Agencement selon revendication 1 ou 2, **caractérisé en ce que** des commutateurs de déclenchement électriques, destinés à interrompre la tension pour les électroaimants (12), sont réalisés en tant que commutateurs de contact rotatifs (19) avec avertisseur lumineux.

4. Agencement selon l'une des revendications 1 à 3, **caractérisé en ce que** les commutateurs de contact rotatifs (19) sont disposés en aval d'un regard (20) de l'unité de commande (4), qui peut être brisé en cas d'urgence.

5. Agencement selon la revendication 4, **caractérisé en ce qu'**un marteau de secours (21) est associé à l'unité de commande (4) pour briser le regard (20).
